# EUROPEAN PATENT APPLICATION

(11) **EP 2 151 153 A1**
(43) Date of publication of application: **10.02.2010**
(21) Application number: 08761456.6
(22) Date of filing: 04.04.2008
(51) Int. Cl.: A01B 1/02, B25G 1/06, B25G 3/00

(54) **AUXILIARY GRIPPING DEVICE FOR TOOLS**

(30) Priority: 04.04.2007 ES 200700779 U
(71) Applicant: Alehuale, S.L., 13247 Los Cortijos (Ciudad Real) (ES)
(72) Inventor: SANCHEZ SANTOS, José Javier, E-13247 Los Cortijos (ES)
(74) Representative: Carvajal y Urquijo, Isabel
(86) International application number: PCT/ES2008/000209
(87) International publication number: WO 2008/122684

(57) **Abstract**

The invention relates to a gripping device that can be fitted to a shaft of a tool or a tube of a mobile structure, and is provided with means for fixing to said handle or said structure. Said grip comprises: a body for fixing to the tool or the tube of the structure, said body having a semi-cylindrical grooved form and being able to surround a shaft or a tube; a connecting element which can receive on one end, a means for fixing the body, and on the other end, a tube for receiving an arm; and an arm which is provided with at least one handle or on the free end thereof.

## Description

This invention refers to an auxiliary handle fitted with multiple grips, with a single arm for coupling to the body of the tool to which this is fitted, which comprises a fixing device allowing its installation on a wide range of tools, products or articles which are manually handled. This handle has been conceived and made in order to provide numerous and considerable advantages in respect of other existing devices with similar purposes.

The usage of tools is conditional on the means of being gripped by the user that these provide. A spade, for example, has a longitudinal shaft which ends in a handle, normally in a the shape of a "T" or closed fork. The user necessarily has to hold the tool with its handle and with their other hand. In other cases such as that of wheelbarrows, the handles are linear grips which have to be held with the user's fingers.

The use of conventional handles or grips forces the user to adopt certain, not always healthy, positions which give rise to anything other than the optimum efficiency, excessive fatigue and specific disorders from using the tool.

### BACKGROUND

Certain products are known of as handles to be fitted only for a limited range of tools.

One of the main problems arising with these handles is that, when fitted in the ideal working position (which will normally be a forward position, clove to the tool on which the handle is fitted) on the handle of the tool, the user has to work with a bent back, as such handles do not have an arm, spur branch or extension handle.

On the other hand, if these handles were fitted in a more rearward position to ensure the back could be straighter, the work and effort to be made by the user would be multiplied, in accordance with the leverage law, since the gripping zone would be further from that of the working tool.

Another of the disadvantages of this type of handles is that the grip is fitted in a certain position and has only one handhold, for which reason many of the normal jobs or movements of the tools to which this is adapted would not be possible, thus limiting or preventing said movements, such as throwing or moving a load with a spade to the side opposite from the one on which the user is standing in respect of the spade.

ES 1062020 discloses an ergonomic handle for hand tools which includes a main handle and a secondary handle, the main one being fitted with a support body for the forearm and a handhold, and the secondary one with a closed fork grip, the secondary one being located at an angle in respect of the main one.

ES 1063212 discloses a kit of ergonomic handles for hand tools, which includes two types of auxiliary handholds able to be fitted on the main handle of a tool, the first type of which is a closed fork and the other includes a support for the forearm and a support for the hand.

CA2275039 discloses an adjustable removable auxiliary handle for a spade comprising a "U" shaped body joined to the bottom end of the spade, which includes a coupling for a long piece which can be extended or retracted, and able to turn in respect of its base.

Other inventions disclose auxiliary handles that are fixed or can be fixed to a hand tool.

US 4881332 shows a tool fitted with an adjustable auxiliary tube which allows this to be supported on the ground, thus facilitating the task of earth moving.

JP 2006-274534 discloses a tool in which the tool is deformed to facilitate gripping this at the front ensuring a closer position to the user in the central handhold as compared with a conventional rectilinear handle.

JP 2002-220849 presents a handle formed of two sections, one for separation from the tool or utensil and the other approximately straight, which has a purpose similar to the item described in the previously mentioned document.

JP 10-331182 shows a tool fitted with an auxiliary rod articulated beside the connection end of the handle with the corresponding tool, able to be extended and rotated, which enables the tool to be held from an additional position.

JP 9-170243 refers to a tool which comprises an additional handle able to be secured to the main handle, which has a fixed extension and position after being fitted.

DE 105 57 050 also discloses a tool fitted with an auxiliary handle held to the main handle at its base for connection with the tool, with a securing part which prevents its movement, rotation or articulation.

Some of these antecedents involve the problem of not being mobile, and thus not significantly improving ergonomy in respect of the tools without an auxiliary handle.

In other cases, mobility does not allow gripping, so that handling the tool is done by the combined use of two handholds, and in the case of CA 2275039, both fixing this and its adjustment involve such complexity that it does not prove useful for performing the corresponding manual movements.

Furthermore; the adjustable handle does not have a closed central grip fitted with lateral projections in any of the cases.

Due to the fact that the tools on which these are fitted are items designed and intended for performing a wide range of jobs, subjecting the tool, its handle and thus any auxiliary handles that are fitted on this to great and wide-ranging twisting, compressive, bending and leverage stresses etc., for which reason any arm or spur branch fitted with links, couplings or extensions, would be completely useless after only a few hours of use through the large number of loose items, bad adjustments and breakages that this would undergo, thus forfeiting all its usefulness.

With this type of handles the grip, through being fitted in a position generally parallel to the floor, and having a single handhold, certain jobs or normal movements of the tools on which it is adapted would not be possible, limiting and even preventing these movements such as throwing or moving a load with a spade to the opposite side from which the user is standing in respect of the spade.

All the handles mentioned in the above paragraphs have securing systems to adapt to the tools consisting of small clamps with several screws or rivets, narrow tabs etc.. They involve the disadvantage of being extremely slow and difficult to fit and remove through the large number of screws, rivets, tabs or plates. They also have the disadvantage that by being adapted to tool handles which are normally made of wood on most occasions, they would mark and damage these.

Another of the drawbacks entailed by all the handles stated above is the impossibility of being quickly removed and changed to be fitted on other tools, through the complicated and awkward nature of their fixing systems consisting of a large number of screws, plates or tabs.

All the handles described above also involve the disadvantage of being designed for a small number of tools, not being very versatile or adaptable to other tools or articles apart from spades or garden tools.

Unlike its antecedents, by using the handle according to the invention the user may obtain such advantages as a better grip and more appropriate position. This thus optimises personal efficiency, being able to do more work with less effort, reducing the fatigue of the person who has to work with the relevant tool, and improving the ergonomy due to the better position of the person in respect of the tool. Any immediate or long-term disorders can thus be prevented.

The invention now being put forward consists of an auxiliary handle for tools which has multiple grips, and is fitted with a single arm and an anchorage system which is installed on any item fitted with at least a shaft with a diameter of from 15 to 50 mm., being able to be applied to tools, utensils, or different articles on the market which require manual use, this handle being able to be regulated as regards its rotation and angle and locked in respect of the item on which it is installed.

### BRIEF DESCRIPTION OF THE DRAWINGS

In order to illustrate the following explanation, we enclose six sheets of drawings with this descriptive report, in which ten figures represent the essence of this invention, and in which:

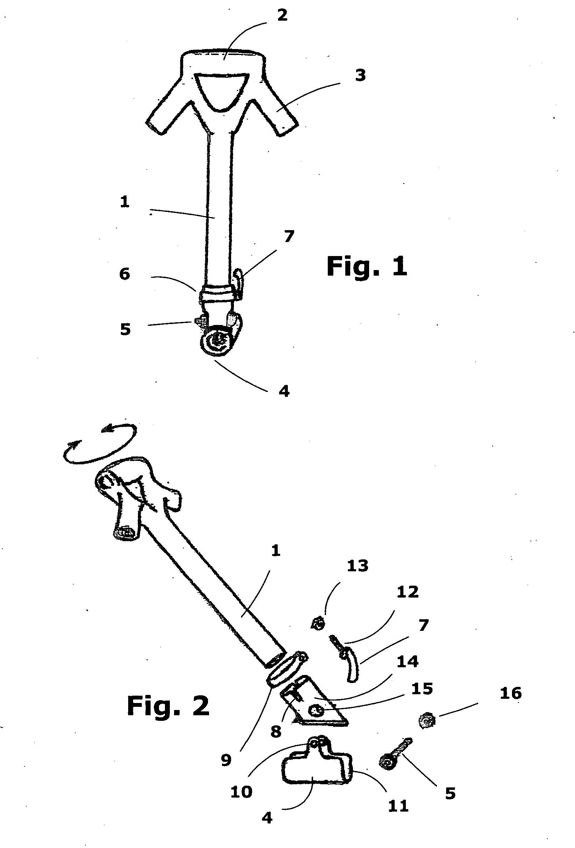

- Figure 1: shows a schematic front view of the auxiliary handle for tools according to the invention;
- Figure 2: shows a schematic perspective view of the handle of figure 1, in which the assembly pieces are separated;
- Figure 3: shows a perspective view in which the handle of the invention is applied to a wheelbarrow;
- Figure 4: shows an application of the handle to a paint roller;
- Figure 5: shows the application of the handle according to the invention on a hook;
- Figure 6: shows the invention's handle applied to a hose nozzle;
- Figure 7: shows the handle according to the previous figures as applied to a sweeping brush;
- Figures 8 and 9: respectively show the application of the handle of the invention to a trolley and pulling platform respectively; and
- Figure 10: shows the application of the handle to an automobile trailer.

### DETAILED DESCRIPTION OF THE INVENTION

This invention consists of an auxiliary handle for tools, which comprises a set of grips 2, 3, a device 4 for securing this to the tool on which this has to be fixed, an arm 1 or lengthened connection body for the grips with the device for fixing to the tool, a means of coupling the arm 1 or lengthened body in respect of the securing device 4, and a means for securing said arm 1 or lengthened body in respect of said securing device 4 of the tool, which enables it to take on a fixed rotational position.

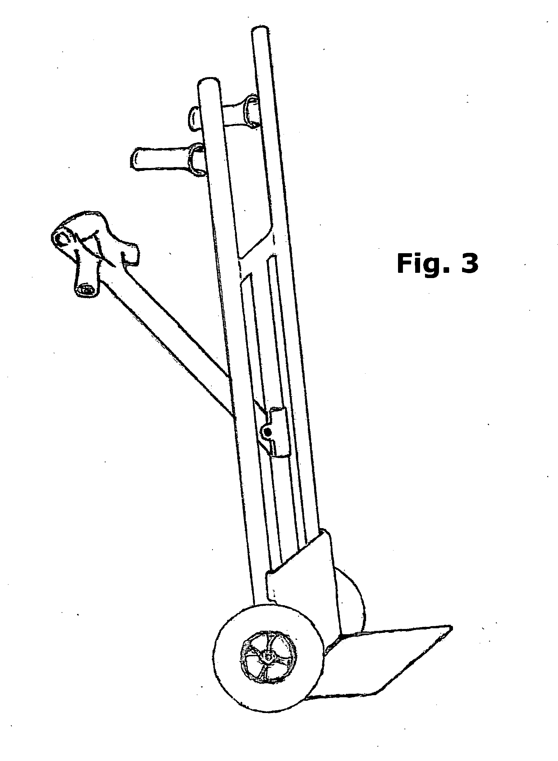

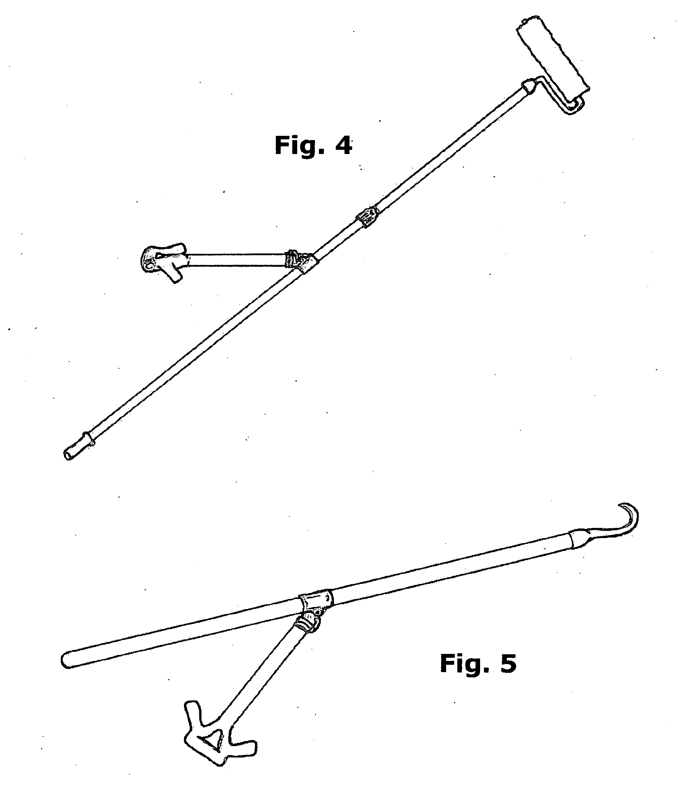

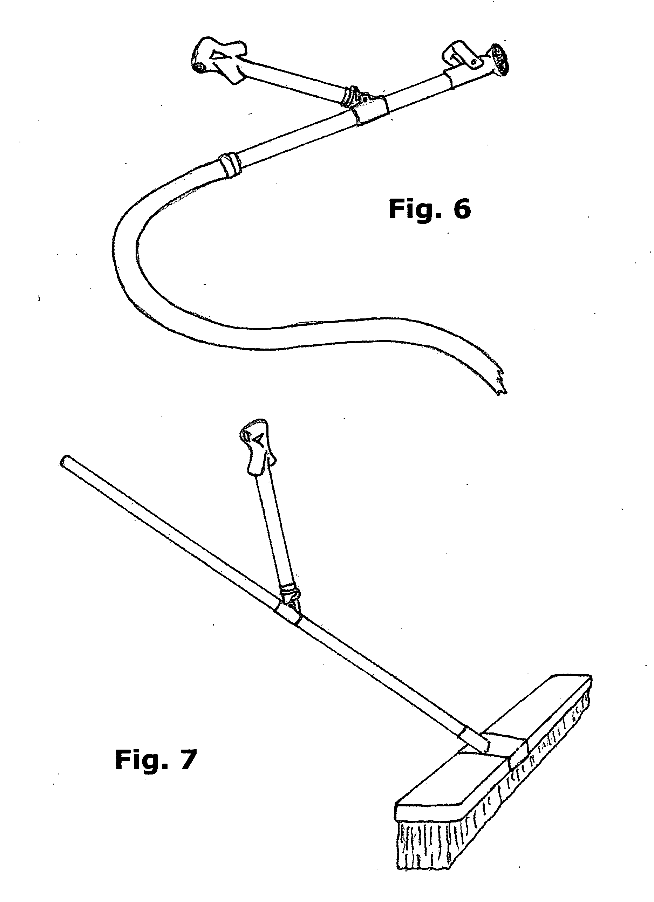

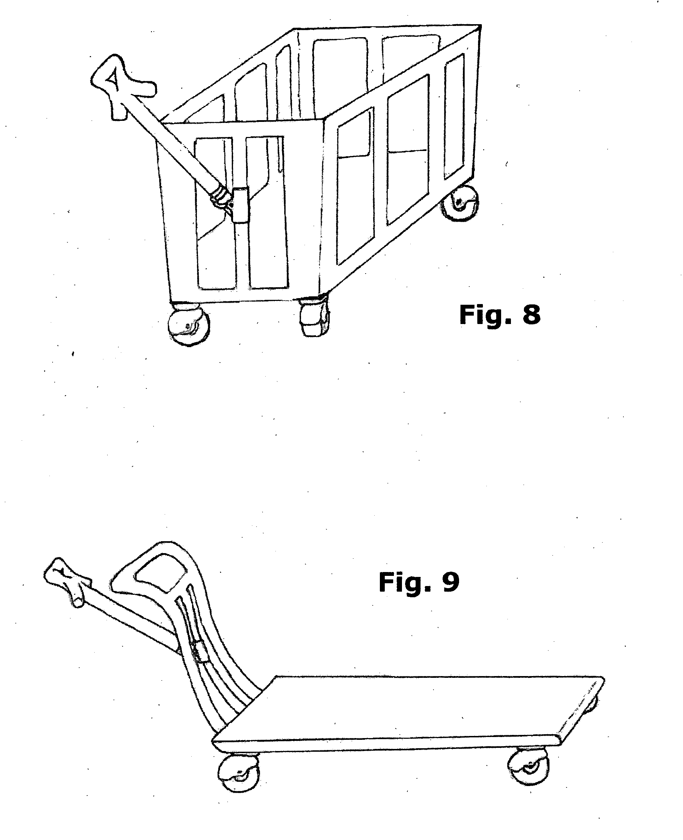

The handle according to the invention comprises a body 4 which forms a semi-cylindrically- shaped interior channel 11. Said body 4 is made of a slightly elastic material such as steel plate or similar. The channel 11 is able to surround the tube of a mobile structure or handle of a tool (Figs. 3 to 10) and can be fitted with no need to dismantle said tool. In its central part the body 4 has emerging extensions 10 each with a hole to be able to house a screw 5.

After fitting the body 4 going around the tube or handle of the corresponding tool, a junction support 14 is fitted on this, which has at the bottom (by the coupling with the body 4) a partial tubular profile which means this can be coupled onto the tube or handle of the took, meaning that this junction support constitutes a through-hole 15 which is made to coincide with the holes in the emerging extensions 10 of the body 4. In this position the screw 5 is made to go through these holes and the hole 15, to be tightened on the other side by means of the corresponding nut 16.

The cylindrical part of the junction support 14 which houses the arm 1 has, in the assembly position, a suitable angle in respect of the direction of the body axis 4 and consequently of the shaft, tube or handle of the tool on which this is applied. This angle preferentially has a value of 45° to 60°.

The outer part of the junction support is tube-shaped and provided with incisions 8 which can be pressed in by means of a clamp 9. The arm 1, consisting of grips 2, 3 is inserted into the tube forming the junction support after the clamp has been properly placed around the edge of the junction support 4.

For securing the arm 1 properly and conveniently in respect of the junction support 4, clamp 6 has holes at the end which are joined by means of a securing screw 12, which acts against a corresponding nut 13. The securing is done manually by using a cam connected to this screw, so that the cam allows screw 12 to turn freely, against the action of nut 13. Hence, by the approach of tab 7 through rotation of its axle, perpendicular to that of the screw 12, it can draw up to this screw tightening the clamp 9 firmly against the upper tube of the junction support 4, and consequently the free end of arm 1 of the handle.

The handle also includes a central shaft with a closed fork 2 and at least one and preferably two extensions or lateral grips 3. Both the central shaft and the lateral grips can be used independently or in combination.

The handle therefore enables free rotation of the arm in respect of its longitudinal axis in so far as this is not fixed, the grips being able to adopt a rotation position of up to 360°, that is, a full turn, so that this can be fully adapted to the user's need.

This helps the person using it to grip and position the tool for any kind of work or movement from any position or angle.

The lateral grips are preferably arranged at around 45° in respect of the arm 1 and in a direction towards the end of this.

Due to the fact that the arm and the grips according to the invention are made up of a single piece with no articulations, couplings, pins, screws or extensions, it is very unlikely for there to be any looseness other than what may be due to improper tightening of the two screws, which is solved by tightening these.

For all these reasons the invention has many advantages, as this can be set up and exchanged quickly and in a very simple way for fitting to a large number of tools, articles or products on the market which are handled manually, the ones represented in Figures 3 to 10 being amongst these, without constituting any limitation.

The structural strength provided minimises the danger of breakages and deterioration.

The references to tools must be understood as including all kinds of apparatus, machines, utensils and tools that are fitted with or could use at least one gripping handle for moving or using these.

This is for application in making auxiliary grips for tools.

## Claims

1. An auxiliary handle for tools, able to be adapted to a handle of a tool or tube of a mobile structure, fitted with means for securing this handle to said structure, **characterised by** including:
• A body (4) for securing to the tool or tube of the structure, this body having a semi-cylindrical channelled shape (11) and said body being able to be arranged so as to surround a handle or tube;
• A junction support (14) which forms, at one of its ends, a means of securing the body (4), and at the other a tube for receiving an arm (1); and
• An arm (1), fitted at its free end with at least one grip (2 or 3).

2. An auxiliary handle for tools according to claim 1, **characterised in that** the body (4) has in the central part of its edges certain emerging extensions (10) fitted with holes able to take a screw (5).

3. An auxiliary handle for tools according to any of the previous claims, **characterised in that** the junction support (14) has a partial tubular profile at the bottom which enables this to be coupled on the tube or handle of the tool to which this is fixed.

4. An auxiliary handle for tools according to either of claims 2 or 3, **characterised in that** the junction support has a through hole (15) which when assembled is made to coincide with the holes of the emerging extensions (10) of the body (4), so that both parts can be secured by means of a screw (5) and its corresponding nut (14).

5. An auxiliary handle for tools according to any of the above claims, **characterised in that** the cylindrical portion of the junction support (14) which houses the arm (1) is at an angle of 45° to 60° in respect of the handle or tube to which this is fitted.

6. An auxiliary handle for tools according to claim 1, **characterised by** also comprising a clamp (9) for securing the arm (1) to the junction support (14).

7. An auxiliary handle for tools according to claim 1, **characterised in that** the clamp includes certain holes in its ends able to be passed thorough by a screw (12) against the action of a nut (13), the head of the screw being able to be fitted with an articulated cam in respect of an axle perpendicular to this screw (12).

8. An auxiliary handle for tools according to claim 5 and either of claims 6 and 7, **characterised in that** the tubular portion of the junction support (14) for coupling with the arm (1) is made with incisions (8) which can be pressed in by means of the clamp (9).

9. An auxiliary handle for tools, according to any of the above claims, **characterised in that** the end of the handle includes a central handhold (2) in the shape of a closed fork.

10. An auxiliary handle for tools according to claim 9, **characterised in that** the handle also includes at least one and preferentially two lateral extensions or symmetric grips (3).

11. An auxiliary handle for tools, according to claim 10, **characterised in that** the lateral extensions or symmetrical grips (3) are arranged to form an angle of roughly 45° in respect of the arm (1) in the direction towards the end of this.

## Amended claims

### Amended claims under Art. 19.1 PCT

**1.** An auxiliary handle for tools, able to be adapted to a handle of a tool or tube of a mobile structure, fitted with means for securing this handle to said structure, which includes:
• A body (4) for securing to the tool or tube of the structure, this body having a semi-cylindrical channelled shape (11) and said body being able to be arranged so as to surround a handle or tube;
• A junction support (14) which forms, at one of its ends, a means of securing the body (4), and at the other a tube for receiving an arm (1); and
• An arm (1), fitted at its free end with at least one grip (2 or 3);
**characterised in that** the handle or grip (2, 3) also includes at least one lateral grip (3), and preferentially two side grips (3), symmetrically arranged.

**2.** An auxiliary handle for tools, according to claim 1, **characterised in that** the lateral extensions or symmetrical grips (3) are arranged to form an angle of roughly 45° in respect of the arm (1) in the direction towards the end of this.

**3.** An auxiliary handle for tools, according to any of the preceding claims, **characterised in that** the end of the handle includes a central handhold (2) in the shape of a closed fork.

**4.** An auxiliary handle for tools according to any of the claims 1 to 3, **characterised in that** the body (4) has in the central part of its edges certain emerging extensions (10) fitted with holes able to take a screw (5).

**5.** An auxiliary handle for tools according to any of the preceding claims, **characterised in that** the junction support (14) has a partial tubular profile at the bottom which enables this to be coupled on the tube or handle of the tool to which this is fixed.

**6.** An auxiliary handle for tools according to either of claims 2 or 3, **characterised in that** the junction support has a through hole (15) which when assembled is made to coincide with the holes of the emerging extensions (10) of the body (4), so that both parts can be secured by means of a screw (5) and its corresponding nut (14).

**7.** An auxiliary handle for tools according to any of the preceding claims, **characterised in that** the cylindrical portion of the junction support (14) which houses the arm (1) is at an angle of 45° to 60° in respect of the handle or tube to which this is fitted.

**8.** An auxiliary handle for tools according to any of the claims 1 to 3, **characterised by** also comprising a clamp (9) for securing the arm (1) to the junction support (14).

**9.** An auxiliary handle for tools according to any of the claims 1 to 3, **characterised in that** the clamp includes certain holes in its ends able to be passed through by a screw (12) against the action of a nut (13), the head of the screw being able to be fitted with an articulated cam in respect of an axle perpendicular to this screw (12).

**10.** An auxiliary handle for tools according to claim 7 and either of claims 8 and 9, **characterised in that** the tubular portion of the junction support (14) for coupling with the arm (1) is made with incisions (8) which can be pressed in by means of the clamp (9).
